Europäisches Patentamt

European Patent Office

Office européen des brevets

(11) Publication number: **0 301 231**
**A1**

## (12) EUROPEAN PATENT APPLICATION

(21) Application number: **88109876.8**

(22) Date of filing: **21.06.88**

(51) Int. Cl.⁴: **B65G 49/08**

(30) Priority: **28.07.87 IT 2147887**

(43) Date of publication of application:
**01.02.89 Bulletin 89/05**

(84) Designated Contracting States:
**DE FR GB IT**

(71) Applicant: **Società Impianti Termoelettrici**
**Industriali s.p.A. S.I.T.I.**
**Via Sempione 82**
**I-28040 Marano Ticino(IT)**

(72) Inventor: **Bossetti, Renato**
**Viale Kennedy, 27**
**I-28100 Novara(IT)**

(74) Representative: **Garrone, Fernando**
**Internazionale Brevetti s.r.l. Via Brentano 2**
**I-20121 Milano(IT)**

(54) **Apparatus for loading and unloading plate-like ceramic materials.**

(57) Apparatus for loading and unloading plate-like
ceramic materials on an accumulation container (10)
having a plurality of superimposed planes (12, 13,
14) of free rollers (16), comprising:
a receiving assembly (22) having drive rollers (21)
arranged on a horizontal plane and a vertically movable compensating container (24), provided with uprights (25) supporting a plurality of superimposed
ledges (26) adapted to support said plate-like ceramic materials, said compensating container being
fed by said plurality of drive rollers (21), a transport
assembly (23) having at least one vertical upright
(30) supporting a transport body (31) vertically mov-
able along said vertical upright (30); said transport
body (31) comprises on the same horizontal plane a
first of part (34) being formed by a horizontal plane
of drive rollers (36) and a second part (35) being
formed by said actuation means (20) for successively movement of each plane of said plurality of
planes.

Fig.1

## APPARATUS FOR LOADING AND UNLOADING PLATE-LIKE CERAMIC MATERIALS

The present invention relates to an apparatus for the loading and unloading of plate-like ceramic materials, in particular tiles, on an accumulation container having a plurality of superimposed planes of free rollers. The free rollers of each plane are preferably vertically aligned in columns with the rollers of all the other upper and lower planes. The free rollers of an accumulation container are all horizontal, parallel to one another and arranged transversely with respect ot the direction of transport of the ceramic material. In particular the term accumulation container indicates e.g. a trolley such as the one disclosed in the Italian utility-model patent application No. 20769 B/85 in the name of SI.T.I. S.p.A. The field of the present invention is furthermore defined by the presence of actuation means for successively movement of each plane of the plurality of planes contained in an accumulation container as defined above. Said actuation means are disclosed, for example, in the Italian patent application No. 20108 A/86 in the name of S.I.T.I. S.p.A., which provides a plurality of conical rotating bodies which engage on both sides, by lateral compression, a plane of said plurality of planes of said accumulation container.

The above summarizes the main field of industrial use of the invention, which field however does not constitute a limitation of its scope, since the apparatus at issue, in particular as described and claimed hereinafter, may be advantageously used in any other equivalent field in which operations of loading and unloading of plate-like ceramic material on a container with free rollers, by loading and unloading one plane at a time, are performed.

Apparata of this type are known e.g. from the Italian patent application No. 20108 A/86, in the name of S.I.T.I. S.p.A., as well as from the Italian patent application No. 40061 A/82 in the name of Barbieri and Tarozzi and from the Italian patent application No. 40051 A/80 in the name of Tecnoferrari. However all these known apparata comprise a tile receiving assembly which is vertically movable. This entails the need to provide a movable hinge which connects the receiving assembly to the conveyor belt which feeds the tiles to the receiving assembly. In practice it has been observed that during their passage on said movable hinge the tiles perform a violent oscillation, in particular when the receiving assembly is in the high position, thus determining frequent breakages of the tiles, with particular reference to large-size tiles (from 30 x 30 cm upwards). The breakage of the tiles, besides entailing a net loss of material ready for cooling, also determines interruptions and the need for cleaning and maintenance which are particularly onerous in current transport lines which are presently fully automated.

The aim of the present invention is therefore to overcome the above described disadvantages by providing an apparatus which allows to transfer tiles onto an accumulation container with free rollers without causing breakages which are not due to an intrinsic flaw of a particular tile.

An object of the invention is to provide an apparatus which is simple in construction and easy to maintain, which is adapted to successively handle tiles of different sizes with no need whatsoever for mechanical adjustments, so that a single machine can be used for every size, up to the maximum sizes (1 x 1 sq.m.).

This and others objects are achieved by the apparatus according to the invention for the loading and the unloading of plate-like ceramic materials on an accumulation container having a plurality of superimposed planes of free rollers, which apparatus comprises:

actuation means for successively moving each plane of said plurality of planes; and is characterized in that it comprises in combination:

a) a receiving assembly comprising a plurality of drive rollers arranged on a horizontal plane and a vertically movable compensating container, provided with uprights supporting a plurality of superimposed shelves (ledges) adapted to support said plate-like ceramic materials, said compensating container being fed by said plurality of drive rollers interpenetrating with said uprights;

b) a transport assembly comprising at least one vertical upright supporting a transport body vertically movable along said vertical uprights; said transport body being protrudingly supported and comprising two separate parts arranged on the same horizontal plane, both having substantially the same length as measured in the direction of transport of said ceramic material; the first of said two separate parts being formed by a horizontal plane of drive rollers, the second of said parts being formed by said actuation means of successively movement of each plane of said plurality of planes; said receiving assembly allowing the complete loading of the first of said parts of said transport body, so that the vertical movement of said transport assembly allows the loading of a particular ledge of said accumulation container, while said compensating container accepts the ceramic material fed in the meantime to said receiving assembly.

Further characteristics and advantages of the invention will become apparent from the description of a preferred but not exclusive embodiment of the apparatus, illustrated only by way of indicative and non-limitative example in the accompanying drawing, wherein:

figure 1 is a lateral view of the appartus according to the invention;

figure 2 is a plan view of the apparatus of figure 1.

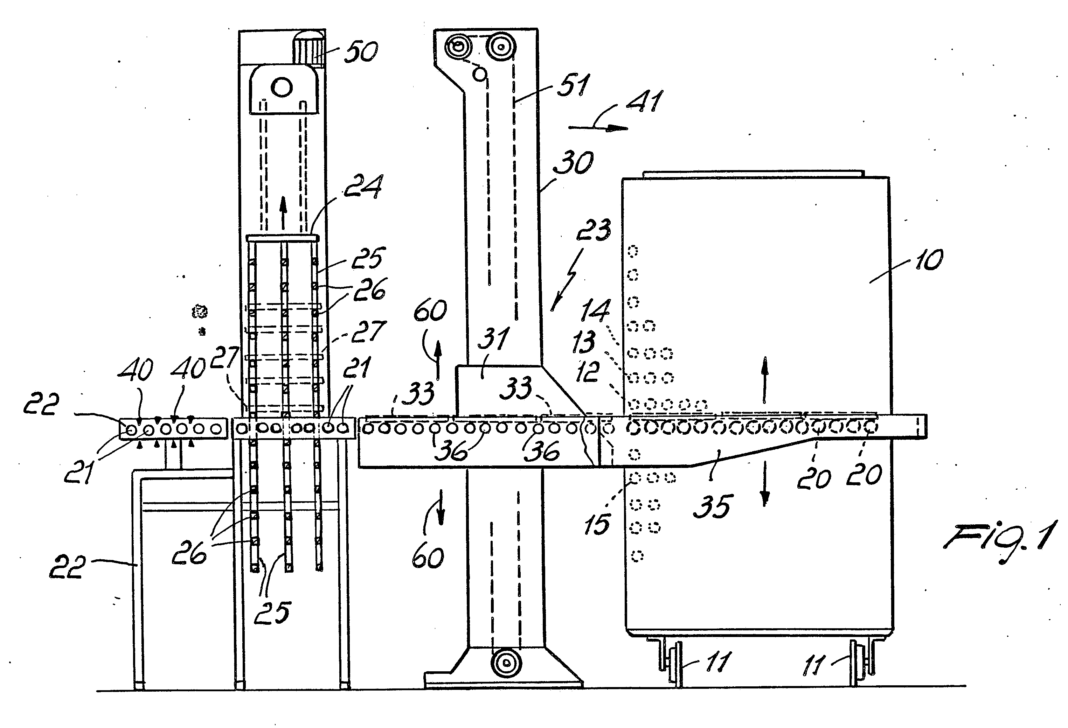

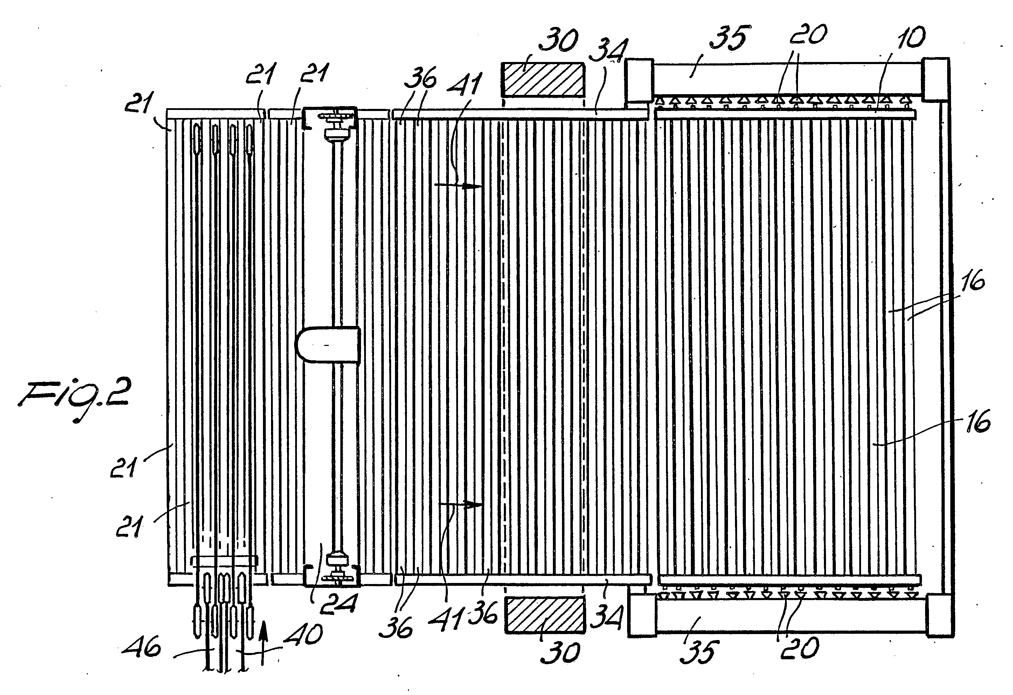

With reference to figures 1 and 2, an accumulation container is provided, constituted in particular by a trolley with wheels 11 which has a plurality of superimposed planes 12, 13, 14 etc. of free rollers 16. With particular reference to figure 1, the free rollers and the planes of rollers are indicated only schematically, but naturally they extend to the entire volume of the trolley 10. The apparatus according to the invention comprises the actuation means 20, which comprise in particular conical bodies which are laterally pressed on both sides against a plane of free rollers 16, so as to allow the movement of that particular plane and therefore allow the loading or the unloading of the plane, according to the direction of rotation of the actuation means 20.

A receiving assembly 22 is provided, comprising a plurality of drive rollers 21 arranged on a horizontal plane and a vertically movable compensating container 24 provided with uprights 25 supporting a plurality of superimposed ledges 26 adapted to support the tiles 27. The compensating container 24 is fed by the plurality of drive rollers 21 interpenetrating with the uprights 25.

A transport assembly 23 is furthermore provided, comprising at least one vertical upright 30, preferably two vertical uprights 30, which support a transport body 31 vertically movable along the vertical uprights 30. The transport body 31 is protrudingly supported and comprises two separate parts 34, 35 arranged on the same horizontal plane and both having substantially the same length measured in the direction of transport of the tiles 33. The first part 34 is constituted by a horizontal plane of drive rollers 36, the second part 35 is constituted by the actuation means 20 for successively movement of each plane 12, 13, 14 etc. of the plurality of planes.

The actuation means 20 for successively movement of each plane 12, 13, 14 etc. are preferably constituted by a plurality of rotating conical bodies engaging on both sides, by lateral compression, the rollers 16 of a plane of the plurality of planes of the accumulation container 10.

According to another embodiment of the invention the actuation means 20 for successively movement of each plane of said plurality of planes are constituted by a plurality of cylindrical bodies engaging on both sides, by lifting from below, the rollers 16 of a plane of said plurality of planes of said accumulation container 10.

The tiles 27 are fed to the receiving assembly 22 by belts 40, each lying on a fixed plane of its own, which is not subject to any vertical variation during the operation of the apparatus for the entire duration of the loading and unloading of each trolley.

The operation is as follows: by means of the belts 40 the tiles 27 are fed to the receiving assembly 22 and are then transported by the drive rollers 21 in the direction 41 of transport of the ceramic material. The compensator 24 intervenes to accumulate tiles in all the idle times, in particular when the transport body 31 is not aligned with the plane of the receiving assembly 22. In fact, when the transport body 31 is loading or unloading the upper or lower planes of the trolley 10, the compensator 24, actuated by the motor 50, allows to maintain a continuous flow in the feed and in the unloading of the tiles 27.

When the transport body 31 has completed the loading or unloading of a plane of the trolley 10, it positions itself at the same height as the receiving assembly so as to completely load or unload the first part 34.

When the first part is completely loaded or unloaded, the transport body 31 is moved vertically according to the arrows 60 by means of the chain 51 until it reaches the plane of the trolley 10 which is to be loaded or unloaded. The actuation means 20 are then caused to intervene and the loading or unloading operation of that particular plane is completed. Thus one proceeds successively one plane at a time, until the entire trolley 10 is fully loaded or unloaded. At this point the transport body 34 is raised above the trolley 10, which is replaced by a subsequent trolley. The automation of the various operations is performed by means of sensors which, arranged in the critical positions, indicate the arrival and the position of the tiles.

In practice it has been observed that the invention achieves all the intended aims, since the transport of the tiles occurs only between contiguous co-planar surfaces. In fact no problems or breakages due to simple reasons of transport during the transfer operations have occurred.

The invention allows to numerous modifications and variations, in particular the transport body 34 can be mounted on a plurality of uprights, e.g. four; the compensator 24 can be supported from below, et., without departing from the scope of the present invention.

## Claims

1. Apparatus for the loading and the unloading of plate-like ceramic materials on an accumulation container having a plurality of superimposed planes of free rollers, comprising:

actuation means for successively moving each plane of said plurality of plnes; and characterized in that it comprises in combination:

a) a receiving assembly comprising a plurality of drive rollers arranged on a horizontal plane and a vertically movable compensating container, provided with uprights supporting a plurality of superimposed ledges adapted to support said plate-like ceramic materials, said compensating container being fed by said plurality of drive rollers interpenetrating with said uprights;

b) a transport assembly comprising at least one vertical upright, supporting a transport body vertically movable along said vertical uprights; said transport body being protrudingly supported and comprising two separate parts arranged on the same horizontal plane, both having substantially the same length as measured in the direction of trans-. port of said ceramic material; the first of said two separate parts being formed by a horizontal plane of drive rollers, the second of said parts being formed by said actuation means for successively movement of each plane of said plurality of planes; said receiving assembly allowing the complete loading of the first of said parts of said transport body, so that the vertical movement of said transport assembly allows the loading of a particular ledge of said accumulation container, while said compensating container accepts the ceramic material fed in the meantime to said receiving assembly.

2. Apparatus according to claim 1, characterized in that said actuation means for successively movement of each plane of said plurality of planes are formed by a plurality of rotating conical bodies engaging on both sides, by lateral compression, the rollers of a plane of said plurality of planes of said accumulation container.

3. Apparatus according to claim 1, characterized in that said actuation means for the movement in succession of each plane of said plurality of planes are formed by a plurality of cylindrical bodies engaging on both sides, by lifting from below, the rollers of a plane of said plurality of planes of said accumulation container.

4. Apparatus according to claim 1, characterized in that said transport assembly comprises a pair of vertical uprights.

5. Apparatus according to claim 1, characterized in that said ceramic material is fed to said receiving assembly by belts each lying on a fixed plane of its own.

6. Apparatus for the loading and unloading of plate-like ceramic materials on an accumulation container having a plurality of superimposed planes of free rollers, according to what is described and illustrated.

_Fig.1_

EP 0 301 231 A1

Fig.2

| | DOCUMENTS CONSIDERED TO BE RELEVANT | | EP 88109876.8 |

| A | DE - A1 - 3 320 737 (BARBIERI & TAROZZI S.P.A.) <br> * Fig. 1 * | 1 | B 65 G 49/08 |
| D | & IT, 40061 A-82, 16.06.82 | | |
| | ---- | | |
| | | | TECHNICAL FIELDS SEARCHED (Int. Cl.4) |
| | | | B 65 G |

The present search report has been drawn up for all claims

| Place of search | Date of completion of the search | Examiner |
| --- | --- | --- |
| VIENNA | 08-11-1988 | PISSENBERGER |